# EUROPEAN PATENT SPECIFICATION

(11) **EP 3 049 299 B1**
(45) Date of publication and mention of the grant of the patent: **18.10.2017**
(21) Application number: 13773198.0
(22) Date of filing: 25.09.2013
(51) Int. Cl.: B60T 17/08

(54) **LOCKING DEVICE OF A BRAKE ACTUATOR HOUSING**
RIEGELVORRICHTUNG FÜR EIN BREMSZYLINDERGEHÄUSE
DISPOSITIF DE VERROUILLAGE POUR UN BOÎTIER DE CYLINDRE DE FREIN

(43) Date of publication of application: 03.08.2016
(73) Proprietor: WABCO Europe BVBA, 1160 Brussels (BE)
(72) Inventor: STEFANIAK, Eligusz, PL-53-023 Wroclaw (PL); BOERKAMP, Antoon Wilhelmus Bartholomeus, PL-9022CB Mantgum (NL); GRZESZCZUK, Michal, PL-55-200 Olawa (PL)
(74) Representative: Lauerwald, Jörg
(86) International application number: PCT/EP2013/070023
(87) International publication number: WO 2015/043634

(56) References cited:
- WO-A2-2009/075659
- DE-A1-102008 053 459
- US-A- 5 315 918

## Description

The present invention relates to a locking device of a brake actuator housing, in particular a spring brake actuator housing, the housing having two housing parts engaging each other in a bayonet coupling, wherein the two housing parts preferably comprise mating means which are adapted to be brought into engagement by an engaging movement.

Brake actuator housings of the aforementioned type are used in the automotive industry and in particular in the truck industry as housings for spring brake actuators. In operation, these actuator housings accordingly are subjected to large positive pressures inside the housings and to large forces caused by spring tension effective to push the housing parts away from each other. In order to ensure correct functioning of the entire brake systems, it is of utmost importance to securely lock the housing parts with respect to each other.

In the prior art, securing of the housing parts with respect to each other is achieved for example with bayonet couplings. Housing parts are coupled together in a bayonet-type locking arrangement often by moving the housing parts axially towards each other, and then rotating the housing parts relative to each other, wherein bayonet tabs are moved in mating recesses of the respective other housing part.

A two-part brake actuator housing which features a bayonet coupling between two housing parts is for example disclosed in DE 10 2008 053 459 A1.

With known brake actuator housings of the aforementioned type, special attention needs to be paid to securing the housing parts in their coupled state. If the brake actuator housings are opened, either by accident or on purpose, while the interior of the housing is subject to positive pressure or large force actuating upon parts of the housing, significant damage can be caused to the brake actuator itself, and - more importantly - to the person or persons opening the housing. Fatal injuries may be the result.

Even if the injury risk is set aside, known housing types still face the problem that unauthorized opening of the housings enables third persons to manipulate the braking system by corrupting the interior of the brake actuator housing. Known solutions to this problem have thus far suggested to provide a locking screw which is installed on the periphery of the housing in order to prevent the housing parts from rotating. This locking screw is installed after fully coupling the bayonet mating means. By ensuring that the housing parts remain together, risk of injury is excluded. Additionally, warning means such as text, symbols et cetera are used to stop persons from removing the screw. The problem however still remains that third persons can manipulate the braking system in unauthorized manner by removing the screw, which leads to injury risks. Further solutions known in the prior art include the crimping of the housing parts along flanged sections to provide a permanent coupling of the housings. While in this solution, it would be more difficult if not impossible to open the housing in unauthorized manner, the unification of the housing parts comes at great manufacturing efforts and cost.

Accordingly, it has been an object of the present invention to provide a secure and inexpensive way of securing the parts of a brake actuator housing.

In one aspect, the invention solves the underlying problem for a brake actuator housing of the initially mentioned type by suggesting a locking device which comprises:
- a flank adapted for positioning against a circumferential surface of the first housing part, said circumferential surface facing the second housing part when assembled to the first housing part,
- the flank comprising a resilient member which is movable between a first position and a second position, wherein
- in the first position, the resilient member projects from the flank away from the first housing part, and
- the resilient member is oriented such that
during an axial engaging movement between the housing parts, the resilient member is moved by the second housing part from the first position into the second position, wherein in the second position, the resilient member gives way to the second housing part, and
after a rotational engaging movement between the housing parts, the resilient member moves back towards the first position wherein the resilient member blocks the second housing part from being moved out of engagement. It has been found that a locking device with the aforementioned features can be made inexpensively. Further, by providing the resilient member which is inserted into the path which has to be crossed by the engaging parts of the bayonet coupling during the engaging procedure such that the resilient member gives way to the engaging parts of the second housing part, the locking device can be installed on the first housing part prior to coupling the housing parts together. The coupling movement itself is not hindered by the locking device. By moving back towards the first position after the engaging movement has ended the resilient member of the locking device is then able to secure the second housing part in its mounted position. The resilient member is preferentially oriented such that once the engaging movement has been completed, the second housing part cannot be moved past the resilient member without destroying the resilient member or other parts of the housing. Herewith, it is ensured that - while the parts could in theory still be disengaged by application of excessive force - unauthorized opening of the brake actuator housing cannot be performed without noticing as the locking device or other parts of the housing will be destroyed during such operation.

The term "engaging movement" of the bayonet coupling comprises, and preferably consists of, an axial movement of the two housing parts towards each other followed by a rotational movement in an engaging direction relative to each other.

Preferably, the first housing part comprises a flange having a plurality of bayonet recesses, and the second housing part comprises a collar having a number of mating bayonet coupling members adapted to register with a respective bayonet recess of the first housing part, and wherein the locking device is adapted to the dimensions of at least one of the bayonet recesses so as to be positioned in, in particular registered with, the at least one recess.

Further, the flange of the first housing part and the collar of the second housing part preferentially overlap such that the at least one locking device is entirely inside of the brake actuator housing when the housing is in an assembled state.

In a preferred embodiment, the resilient member is adapted to be displaced into the second position during the axial movement, and to snap back towards the first position after the rotational movement of the two housing parts has been completed.

Preferentially, the circumferential surface of the first housing part is an outer surface, which in the assembled state of the housing faces a corresponding inner circumferential surface of the second housing part, or vice versa.

In a further preferred embodiment, the flank comprising the resilient member is a first flank, and the locking device further comprises a second flank adapted for positioning against a surface opposite of the first circumferential surface on the first housing part.

It is preferred if the first flank and the second flank are oriented towards each other and spaced apart from each other such that both flanks at least partially abut the first housing part when mounted. The function of the second flank also preferably is to act as an abutment or counter bearing for the first flank to counter any force or torque imposed on the resilient member.

Preferably, the resilient member is adapted to project from the (first) flank in the first position in a first angle, and further adapted to project from (first) flank in the second position in a second angle, wherein the first angle is greater than the second angle.

For example, the first angle may lie in a range between 30° and 40°, particularly in a range between 32° and 38°. It has been found that in these ranges, a good compromise is established between a necessary displacement/deformation of the resilient member and the amount by which the resilient member projects into the path of movement of the second housing part. Thereby, the stress inflicted upon the resilient member during the mounting procedure is still acceptable, and at the same time the geometry of the locking device in the first position ensures high stability when having to withstand forces imposed during an attempt to disengage the second housing part from the first housing part.

In a further example, the resilient member is adapted to project from the first circumferential surface in the second position in a range between 4° and 12°, particularly in the range of 6° to 8°. In these ranges a good compromise is established between the necessity of providing a low enough friction coefficient between the resilient member, and preventing scratches on contact surfaces of the second housing part during engaging movement. If the angle of projection is selected too low, there is a risk of breakance or permanent deformation of the resilient member.

According to a further preferred embodiment of the locking device, the resilient member and the flank, preferably being the first flank, are integrally formed. It is still further preferred, if also or alternatively the first flank and the second flank are integrally formed.

By forming all functional parts of the locking device integrally from one piece, for example from one sheet of metal, very cost efficient design and manufacture of the locking device is made possible.

Preferentially, the first flank comprises a clamping tab projecting from the first flank towards the second flank.

It is particularly preferred if the clamping tab is integrally formed with the first flank.

According to a further preferred embodiment of the locking device, the resilient member comprises at least one peripheral glider portion, the surface of said glider portion preferably being curved. In the embodiment comprising a first and a second flank, the surface of said glider portion is preferably curved towards the second flank.

The glider portion of the resilient member is adapted to facilitate the gliding movement of the second housing part past the resilient member while at the same time displacing the resilient member from the first position into the second position. The glider portion can exemplarily be formed as a rounded edge.

In a further aspect, the invention solves the underlying problem by providing a brake actuator housing having two housing parts engaging each other in a bayonet coupling, wherein the two housing parts comprise mating means which are adapted to be brought into engagement by an engaging movement, and a locking device for securing the housing parts in their engaged position, wherein said locking device preferably is a locking device according to any one of the previously described preferred embodiments, and comprises:
- a flank positioned against a circumferential surface of the first housing part, said circumferential surface facing the second housing part when assembled to the first housing part,
- the flank comprising a resilient member which is movable between a first position and a second position, wherein
- in the first position, the resilient member projects from the flank away from the circumferential surface of the first housing part, and
- the resilient member is oriented such that
during the engaging movement, the resilient member is moved by the second housing part from the first position into the second position, wherein in the second position, the resilient member gives way to the second housing part, and
after the engaging movement, the resilient member moves back towards the first position wherein the resilient member blocks the second housing part from being moved out of engagement.

Preferably, the first housing part comprises a flange having a plurality of bayonet recesses, and the second housing part comprises a collar having a number of mating bayonet coupling members registered with a respective bayonet recess of the first housing part, and wherein at least one locking device is positioned in at least one of the recesses.

A further preferred embodiment of the resilient brake housing, the flange of the first housing part and the collar of the second housing part overlap such that the at least one locking device is entirely inside of the brake actuator housing. By having the housing parts overlap to the aforementioned extent, it can reliably ensure that the locking device itself is out of reach for third persons trying to manipulate the housing integrity.

Further advantages of the brake actuator housing according to the present invention rely upon the same technical features and effects as presented hereinabove with respect to the preferred embodiments of the locking device according to the present invention. Explicit reference to those embodiments is therefore made in this respect.

For a more complete understanding of the invention, the invention will now be described in more detail with reference to the accompanying drawing. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the invention as defined by the appended claims. In particular, any reference signs in the claims shall not be construed as limiting the scope of the invention. The word "comprising" does not exclude other elements or steps. The wording "a" or "an" does not exclude a plurality.

In brief, the figures which reference will be made show:
Fig. 1 a shows a locking device according to a preferred embodiment in a three-dimensional view,
Fig. 1b shows the locking device of fig. 1 a in an alternative three-dimensional view,
Fig. 2a shows a side view of the locking device of figs. 1 a,b in a first state,
Fig. 2b shows the locking device of fig. 2a in an alternative state,
Fig. 3 shows a detail of the locking device of fig. 2a,
Fig. 4 shows a further side view of the locking device of figs. 1 - 3,
Fig. 5 shows a further side view of the locking device according to figs. 1 - 4,
Fig. 6 shows a partial three-dimensional view of a first brake actuator housing part according to a preferred embodiment, and
Figs. 7a,b show partially cut-out detail views of a brake actuator housing including the part of fig. 6.

At first, the structure and function of the locking device according to the invention will hereinafter be described.

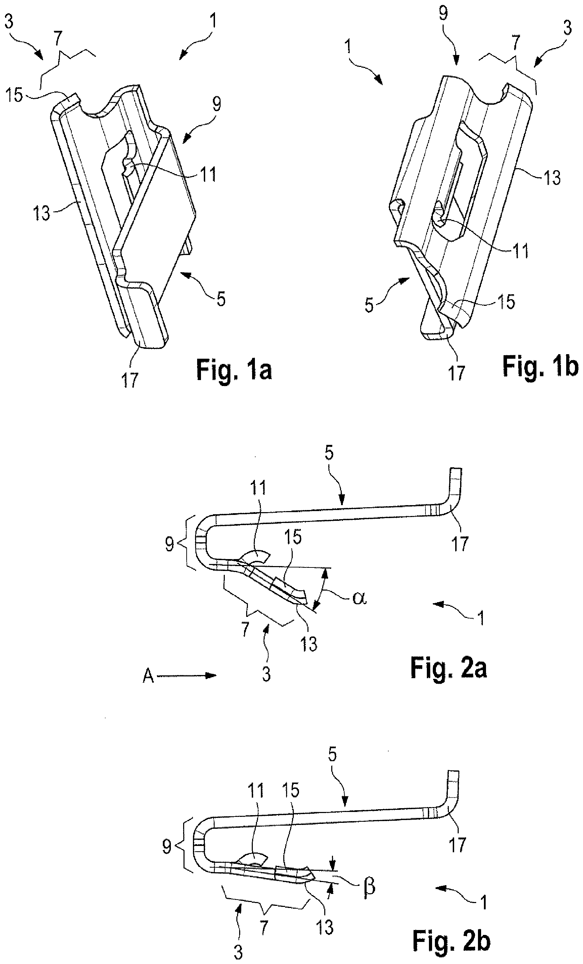

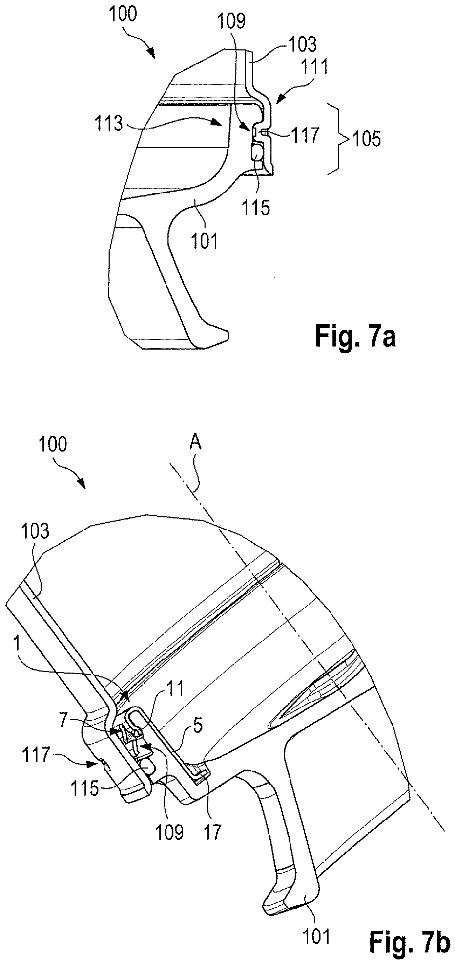

Figs. 1a to 5 show a locking device 1 according to a preferred embodiment of the invention. The locking device 1 comprises a first flank 3 which is adapted to be positioned against a circumferential surface of a first brake actuator housing part 101, cf. figs. 7a,b. Spaced apart from the first flank 3, the locking device 1 comprises a second flank 5. The first flank 3 and the second flank 5 are joined on one side by a bridge section 9. In the preferred embodiment, the flank 3 and 5 are integrally formed as one piece.

The first flank 3 of the locking device 1 comprises a resilient member 7. The resilient member 7 is formed at an angle relative to the section of flank 3 proximate the bridge section 9. In the preferred embodiment, also the resilient member 7 is integrally formed as one piece with the first flank.

The first flank 3 further comprises a clamping tab 11 projecting from the first flank 3 towards the second flank 5. The clamping tab 11 preferably comprises an arcuate section to facilitate gliding while in contact with the circumferential surface of the first housing part it is adapted to register with.

On a side facing away from the second flank 5, the first flank 3 comprises on a peripheral section of the resilient member 7 a glider portion 13. The glider portion 13 comprises a curved edge, the curvature of which is formed towards the second flank 5. The glider portion is adapted to facilitate gliding movement of a bayonet mating element 117 (fig. 7a,b) of the second housing part (103, fig. 7a,b) in the direction of arrow A (fig. 2a, 2b).

The resilient member 7 of the first flank 3 further comprises on its side edges in its peripheral section stop shoulders 15 which are substantially perpendicularly angled with respect to the curved edge of glider portion 13 and with respect to the surface of the first flank 3 facing away from the second flank 5. As can particularly be seen from figs. 2a,b the length of the second flank 5 exceeds the length of the first flank 3.

The second flank 5 comprises on its end section opposite the bridge section 9 a curved edge 17 oriented away from the first flank 3.

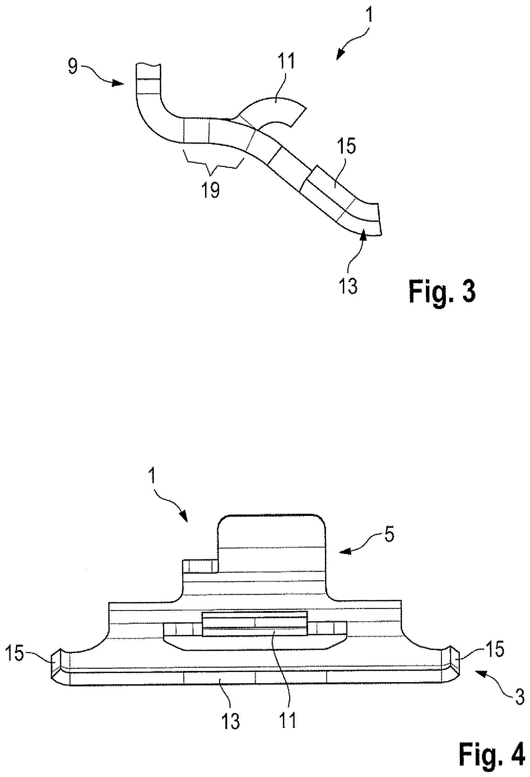

As can particularly be seen in fig. 3, the resilient member 7 is formed on the first flank 3 and transitions from a section parallel to the second flank 5 with a curved portion 19.The resilient member 7 is displaceable by deformation of the curved section 19.

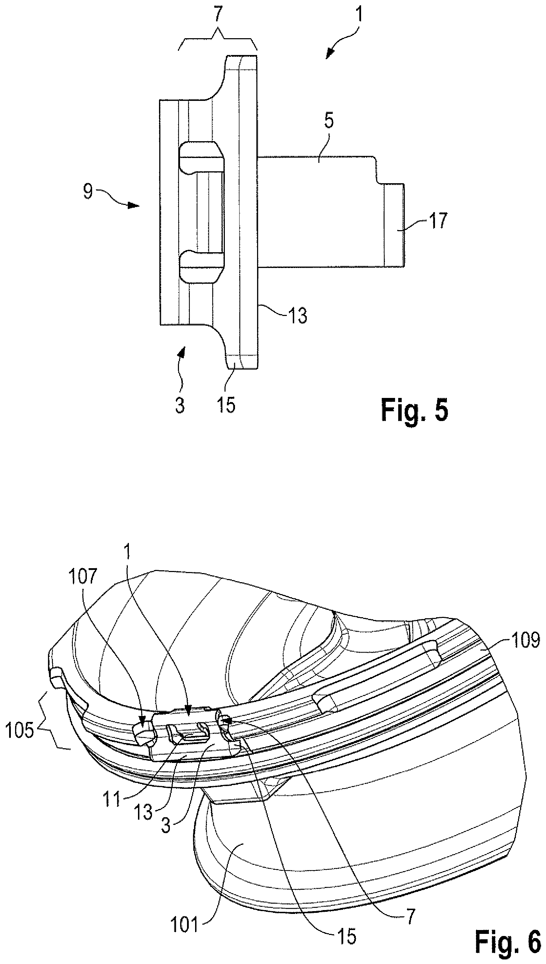

When being deformed, the resilient member 7 will be displaced from a first position which is shown in fig. 2a into a second position which is shown in fig. 2b. This occurs mainly if not exclusively by forcing the peripheral section of the first flank, in particular the glider portion 13, towards the second flank 5, thus changing the curvature of the rounded curved portion 19. When mounted, this is achieved by moving a second housing part along the arrow A shown in figs. 2a,b. More details regarding the engaging movement and functions will be transparent from studying figs. 6 and 7 herein below.

As can be seen from figs. 1a,b and 3 in particular, the clamping tab 11 is formed in the first flank 3 such that it will not be impeded in its functions by deforming the resilient member 7. This is to ensure that the locking device 1 maintains its proper position when mounted on the first housing part irrespective of the displacement of the resilient member 7.

Fig. 4 presents a side-view from the peripheral section of the first flank 3 and second flank 5 towards the bridge section 9 and further documents the orientation of the stop shoulder 15 in a substantially perpendicular orientation towards the glider portion 13. Fig. 5 is a 90° rotation from fig. 4 essentially and also depicts the substantially perpendicular orientation of the stop shoulders 15 with respect to the glider portion 13.

In fig. 5, the second flank 5 is oriented behind the first flank 3 such that the clamping tab (11 (fig. 2a,b) is visible in front of the second flank 5.

In figs. 6 and 7 a,b, the mounting situation of a locking device 1 according to the invention in a brake actuator housing according to the invention is shown. Fig. 6 shows a first housing part 101 of a brake actuator housing 100 (figs 7a,b).

The first housing part 101 and the second housing part 103 comprise a bayonet coupling 105 in a section in which they overlap. The first housing part 101 comprises as part of the bayonet coupling a number of recesses 107 extending substantially parallel to an axis A of the first housing part 101. The number of recesses 107 lead into an annular surface 109 extending along the circumference of an outer surface of the first housing part 101. In the shown embodiment, said surface is an outside surface. In alternative embodiments, the surface comprising the recesses and the annular surface 109 may also be an inner circumferential surface. The recesses 107 and the annular surface 109 are arranged on a flange 113 of the first housing part 101.

The second housing part 103 comprises a number of mating members 117 - so-called bayonet tabs - adapted to register with the recesses 107 and annular surface 109, wherein the number of mating elements in the second housing part 103 is selected fittingly with respect to the number of recesses 107 in the first housing part 101. The mating elements 117 are not shown in fig. 6 in order to facilitate the view of the locking device 1. In figs. 6 and 7b, exemplarily one locking device 1 is shown in its mounting position. The locking device 1 is registered with a recess 107 and positioned against the outer circumferential surface of the first housing part 101. Due to the clamping tab 11 abutting against the outer surface, and the second flank 5 of the locking device registering against the opposite, inner surface of the same flange 113, the locking device 1 is held firmly in position against the first housing part 101. The resilient member 7 of locking device 1 projects from the first flank 3 away from the first housing part 101 and is in the stage shown in figs. 6 and 7 snapped back towards the first position. In this position, the stop shoulders 15 constitute a locking barrier against rotational movement of the first housing part 101 relative to the second housing part 103 past the locking device 1. This permanently locking state is reached in operation as follows:
When assembling the brake actuator housing parts 101, 103, at first a number of locking devices 1 is first provided. These locking devices 1 are then registered with corresponding recesses 107 in the flange 113 of the first housing part 101. The clamping tab 11 and the second flank 5 at least partially abut against the inner and outer circumferential surfaces of the first housing part 101 in the portion where the locking device 1 is registered, thus holding the locking device 1 in position. After positioning the number of locking devices, the second housing part 103 is moved axially with respect to axis A towards the first housing part 101 with mating elements 117 of the second housing part 103 oriented in line with the recesses 107 of the first housing part 101.

The mating elements 117 move along the resilient member 7 of the first flank 3 of locking device 1 and gradually displace the resilient member 7 the further the second housing part 103 is moved axially towards the first housing part 101.

When the mating elements 117 have been moved sufficiently far towards the first housing part 101 so as to be in line with the annular surface 109, the engaging movement is continued by performing a rotational movement of the second housing part 103 and the first housing part 101 relative to each other. The resilient member 7, which has been displaced inwards into the annular surface 109, remains in its displaced, second, position until the mating elements 117 have been rotated sufficiently far along the annular surface 109. Then the resilient member 7 will move by its own spring force back towards the first position.

It is preferred if the locking device 1 is designed such that the first position, e.g. angular position of the resilient member 7 relative to the first flank 3 in its unmounted state is oriented at a greater angle than in its mounted state after fully engaging the mating elements with the recesses 107 and annular surface 109 of the first housing part. This may be due to the fact that either the resilient member 7 in the mounted state abuts against a circumferential surface of the second housing part 103.

The stop shoulders 15 of the locking device 1 are angled with respect to the curvature of annular surface 109 such that a rotational movement of the second housing part 103 relative to the first housing part 101 does not lead to a displacement of the resilient member 7 back towards the second position. Instead, the displacement of the resilient member 7, once the housing parts 101, 103 are in the engaged position, will now only be possible by applying excessive force which leads to a destruction of the structural integrity either the locking device 1, the first housing part 101, the second housing part 103, or several or all of those.

The first housing part 101 comprises a flange 113, and the second housing part 103 comprises a collar 111 which optionally is made from a sheet metal.

In order to fully encapsulate the locking device 1 inside the brake actuator housing, the collar 111 and flange 113 of the first and second housing parts 101, 103 overlap sufficiently so as to completely cover at least the first flank 3 of locking device 1 which is interposed between the collar 111 and flange 113 of the first and second housing parts 101, 103. Additionally, a sealing element 115 is provided to guarantee air-tightness of the housing. The locking device 1 and the sealing element 115 are sufficiently spaced apart from each other such that the locking device 1 or one of the mating elements cannot damage the sealing element 115 during the engaging movement.

As has been shown hereinabove, the procedure of assembling the brake actuator housing can be easily accomplished, and the locking device 1 be installed very easily and quickly. At the same time, the securing function of the locking device 1, is very reliable.

### List of references (Part of the description)

- 1: locking device
- 3: first flank
- 5: second flank
- 7: resilient member
- 9: bridge section
- 11: clamping tab
- 13: glider portion
- 15: stop shoulders
- 17: curved edge
- 19: curved portion
- 100: brake actuator housing
- 101: first housing part
- 103: second housing part
- 105: bayonet coupling
- 107: recesses
- 109: annular surface
- 111: collar
- 113: flange
- 115: sealing element
- 117: mating element

## Claims

1. A locking device (1) for a brake actuator housing, the housing having two housing parts (101, 103) engaging each other in a bayonet coupling (105), the device comprising:
- a flank (3) adapted for positioning against a circumferential surface of the first housing part (101), said circumferential surface facing the second housing part (103) when assembled to the first housing part,
- the flank comprising a resilient member (7) which is movable between a first position and a second position, wherein
- in the first position, the resilient member (7) projects from the flank (3) away from the first housing part (101), and
- the resilient member (7) is oriented such that
during an axial engaging movement between the housing parts (101, 103), the resilient member (7) is moved by the second housing part (103) from the first position into the second position, wherein in the second position, the resilient member (7) gives way to the second housing part (103), and
after a rotational engaging movement between the housing parts (101, 103), the resilient member (7) moves back towards the first position wherein the resilient member (7) blocks the second housing part (103) from being moved out of engagement.

2. The locking device (1) according to claim 1,
wherein the circumferential surface of the first housing part (101) is an outer surface, which in the assembled state of the housing faces a corresponding inner circumferential surface of the second housing part (103).

3. The locking device (1) according to any one of claims 1 or 2,
wherein the flank (3) is a first flank, and the locking device (1) further comprises a second flank (5) adapted for positioning against a surface opposite of the first circumferential surface on the first housing part (101).

4. The locking device (1) according to claim 3,
wherein the first flank (3) and the second flank (5) are oriented towards each other and spaced apart from each other such that both flanks (3,5) at least partially abut the first housing part (101) when mounted.

5. The locking device (1) according to any one of the preceding claims,
wherein the resilient member (7) is adapted to project from the flank (3) in the first position in a first angle (α), and further adapted to project from the flank (3) in the second position in a second angle (β), wherein the first angle (α) is greater than the second angle(β).

6. The locking device (1) according to any one of the preceding claims,
wherein the resilient member (7) and the flank (3), preferably being the first flank, are integrally formed.

7. The locking device (1) according to any one of claims 3 to 6, wherein the first flank (3) and the second flank (5) are integrally formed.

8. The locking device (1) according to any one of claims 3 to 7, wherein the first flank (3) comprises a clamping tab (11) projecting from the first flank (3) towards the second flank (5).

9. The locking device (1) according claim 8,
wherein the clamping tab (11) is integrally formed with the first flank (3).

10. The locking device (1) according to any one of claims 1 and 2,
wherein the resilient member (7) comprises at least one peripheral glider portion (13), the surface of said glider portion (13) being curved.

11. The locking device (1) according to any one of claims 3 to 9, wherein the resilient member (7) comprises at least one peripheral glider portion (13), the surface of said glider portion (13) being curved towards the second flank (5).

12. A brake actuator housing (100), comprising
two housing parts (101, 103) engaging each other in a bayonet coupling, wherein the two housing parts (101, 103) comprise mating elements which are adapted to be brought into engagement by an engaging movement, **characterised in that** the housing further comprises a locking device (1) for securing the housing parts in their engaged position, wherein said locking device (1) is a locking device (1) according to one of the preceding claims.

13. The brake actuator housing of claim 12,
wherein the first housing part (101) comprises a flange (113) having a plurality of bayonet recesses (107), and the second housing part (103) comprises a collar (111) having a number of mating bayonet coupling members registered with a respective bayonet recess (107) of the first housing part (101), and wherein at least one locking device (1) is positioned in the at least one recess (107).

14. The brake actuator housing (100) of claim 13, wherein the flange (113) of the first housing part (101) and the collar (111) of the second housing part (103) overlap such that the at least one locking device (1) is entirely inside of the brake actuator housing (100).

## Patentansprüche

1. Verriegelungsvorrichtung (1) für ein Bremsenstellgliedgehäuse, wobei das Gehäuse zwei Gehäuseteile (101, 103) hat, die einander in einer Bajonettkoppelung (105) in Eingriff nehmen, wobei die Vorrichtung Folgendes umfasst:
- eine für die Positionierung gegen eine Umfangsfläche des ersten Gehäuseteils (101) geeignete Flanke (3), wobei die Umfangsfläche dem zweiten Gehäuseteil (103) zugewandt ist, wenn er mit dem ersten Gehäuseteil zusammengebaut ist,
- wobei die Flanke
ein federndes Glied (7) umfasst, das zwischen einer ersten Position und einer zweiten Position bewegbar ist, wobei
- das federnde Glied (7) in der ersten Position von der Flanke (3) vom ersten Gehäuseteil (101) weg vorragt und
- das federnde Glied (7) so ausgerichtet ist, dass
das federnde Glied (7) während einer axialen Eingriffsbewegung zwischen den Gehäuseteilen (101, 103) durch den zweiten Gehäuseteil (103) aus der ersten Position in die zweite Position bewegt wird, wobei das federnde Glied (7) in der zweiten Position für den zweiten Gehäuseteil (103) Platz macht, und
das federnde Glied (7) sich nach einer Dreheingriffsbewegung zwischen den Gehäuseteilen (101, 103) zu der ersten Position hin zurückbewegt, wobei das federnde Glied (7) den zweiten Gehäuseteil (103) blockiert, so dass er nicht außer Eingriff bewegt wird.

2. Verriegelungsvorrichtung (1) nach Anspruch 1,
wobei die Umfangsfläche des ersten Gehäuseteils (101) eine Außenfläche ist, die im zusammengebauten Zustand des Gehäuses einer entsprechenden inneren Umfangsfläche des zweiten Gehäuseteils (103) zugewandt ist.

3. Verriegelungsvorrichtung (1) nach einem der Ansprüche 1 oder 2,
wobei die Flanke (3) eine erste Flanke ist und die Verriegelungsvorrichtung (1) ferner eine für die Positionierung gegen eine der ersten Umfangsfläche am ersten Gehäuseteil (101) gegenüberliegende Fläche geeignete zweite Flanke (5) ist.

4. Verriegelungsvorrichtung (1) nach Anspruch 3,
wobei die erste Flanke (3) und die zweite Flanke (5) aufeinander zu ausgerichtet und voneinander beabstandet sind, so dass beide Flanken (3, 5) im montierten Zustand mindestens teilweise an den ersten Gehäuseteil (101) anstoßen.

5. Verriegelungsvorrichtung (1) nach einem der vorhergehenden Ansprüche,
wobei das federnde Glied (7) geeignet ist, von der Flanke (3) in der ersten Position in einem ersten Winkel (α) vorzuragen, und ferner geeignet ist, von der Flanke (3) in der zweiten Position in einem zweiten Winkel (β) vorzuragen, wobei der erste Winkel (α) größer als der zweite Winkel (β) ist.

6. Verriegelungsvorrichtung (1) nach einem der vorhergehenden Ansprüche,
wobei das federnde Glied (7) und die Flanke (3), bei der es sich vorzugsweise um die erste Flanke handelt, integral ausgebildet sind.

7. Verriegelungsvorrichtung (1) nach einem der Ansprüche 3 bis 6, wobei die erste Flanke (3) und die zweite Flanke (5) integral ausgebildet sind.

8. Verriegelungsvorrichtung (1) nach einem der Ansprüche 3 bis 7,
wobei die erste Flanke (3) eine von der ersten Flanke (3) zu der zweiten Flanke (5) vorragende Klemmlasche (11) umfasst.

9. Verriegelungsvorrichtung (1) nach Anspruch 8,
wobei die Klemmlasche (11) integral mit der ersten Flanke (3) ausgebildet ist.

10. Verriegelungsvorrichtung (1) nach einem der Ansprüche 1 und 2,
wobei das federnde Glied (7) mindestens einen Umfangsgleiterabschnitt (13) umfasst, wobei die Oberfläche des Gleiterabschnitts (13) gekrümmt ist.

11. Verriegelungsvorrichtung (1) nach einem der Ansprüche 3 bis 9,
wobei das federnde Glied (7) mindestens einen Umfangsgleiterabschnitt (13) umfasst, wobei die Oberfläche des Gleiterabschnitts (13) zu der zweiten Flanke (5) hin gekrümmt ist.

12. Bremsenstellgliedgehäuse (100), umfassend
zwei Gehäuseteile (101, 103), die einander in einer Bajonettkoppelung in Eingriff nehmen,
wobei die beiden Gehäuseteile (101, 103) zusammenpassende Elemente umfassen, die geeignet sind, durch eine Eingriffsbewegung in Eingriff gebracht zu werden,
**dadurch gekennzeichnet, dass** das Gehäuse ferner eine Verriegelungsvorrichtung (1) zur Befestigung der Gehäuseteile in ihrer Eingriffsposition umfasst, wobei die Verriegelungsvorrichtung (1) eine Verriegelungsvorrichtung (1) nach einem der vorhergehenden Ansprüche ist.

13. Bremsenstellgliedgehäuse nach Anspruch 12,
wobei der erste Gehäuseteil (101) einen Flansch (113) mit einer Vielzahl von Bajonettaussparungen (107) umfasst und der zweite Gehäuseteil (103) einen Bund (111) mit mehreren zusammenpassenden Bajonettkoppelungsgliedern umfasst, die mit einer jeweiligen Bajonettaussparung (107) des ersten Gehäuseteils (101) registerhaltig sind, und wobei mindestens eine Verriegelungsvorrichtung (1) in der mindestens einen Aussparung (107) positioniert ist.

14. Bremsenstellgliedgehäuse (100) nach Anspruch 13,
wobei sich der Flansch (113) des ersten Gehäuseteils (101) und der Bund (111) des zweiten Gehäuseteils (103) überlappen, so dass sich die mindestens eine Verriegelungsvorrichtung (1) gänzlich in dem Bremsenstellgliedgehäuse (100) befindet.

## Revendications

1. Dispositif de verrouillage (1) pour un boîtier d'actionneur de frein, le boîtier comportant deux parties de boîtier (101, 103) qui s'unissant l'une à l'autre selon un accouplement à baïonnette (105), le dispositif comprenant :
- un flanc (3) destiné à se positionner contre une surface de la circonférence de la première partie du boîtier (101), ladite surface de la circonférence faisant face à la seconde partie du boîtier (103) lorsqu'elle est assemblée à la première partie du boîtier,
- le flanc comprenant un élément élastique (7) qui se déplace entre une première position et une seconde position, dans lequel
- dans la première position, l'élément élastique (7) fait saillie par rapport au flanc (3) en s'écartant de la première partie du boîtier (101) et
- l'élément élastique (7) est orienté de sorte que
pendant un mouvement d'accouplement axial entre les parties du boîtier (101, 103), l'élément élastique (7) est déplacé par la seconde partie du boîtier (103) de la première position à la seconde position, où, dans la seconde position, l'élément élastique (7) cède la place à la seconde partie du boîtier (103) et
après un mouvement d'accouplement en rotation entre les parties du boîtier (101, 103), l'élément élastique (7) se redéplace vers la première position dans laquelle l'élément élastique (7) empêche que la seconde partie du boîtier (103) ne soit amenée hors de sa position d'accouplement.

2. Dispositif de verrouillage (1) selon la revendication 1,
dans lequel la surface de la circonférence de la première partie du boîtier (101) est une surface extérieure, laquelle, dans l'état assemblé du boîtier, fait face à une surface de la circonférence intérieure correspondante de la seconde partie du boîtier (103).

3. Dispositif de verrouillage (1) selon l'une quelconque des revendications 1 ou 2,
dans lequel le flanc (3) est un premier flanc, et le dispositif de verrouillage (1) comprend en outre un second flanc (5) destiné à se positionner contre une surface opposée à la première surface de la circonférence de la première partie du boîtier (101).

4. Dispositif de verrouillage (1) selon la revendication 3,
dans lequel le premier flanc (3) et le second flanc (5) sont orientés l'un vers l'autre et espacés l'un de l'autre de sorte que les deux flancs (3, 5) s'appuient au moins partiellement contre la première partie du boîtier (101) lorsqu'ils sont montés.

5. Dispositif de verrouillage (1) selon l'une quelconque des revendications précédentes, dans lequel l'élément élastique (7) est destiné à faire saillie par rapport au flanc (3) dans la première position selon un premier angle (α) et en outre destiné à faire saillie par rapport au flanc (3) dans la seconde position selon un second angle (β), le premier angle (α) étant supérieur au second angle (β).

6. Dispositif de verrouillage (1) selon l'une quelconque des revendications précédentes, dans lequel l'élément élastique (7) et le flanc (3), de préférence le premier flanc, sont réalisés en une seule pièce.

7. Dispositif de verrouillage (1) selon l'une quelconque des revendications 3 à 6, dans lequel le premier flanc (3) et le second flanc (5) sont réalisés en une seule pièce.

8. Dispositif de verrouillage (1) selon l'une quelconque des revendications 3 à 7, dans lequel le premier flanc (3) comprend une patte de serrage (11) faisant saillie par rapport au premier flanc (3) en direction du second flanc (5).

9. Dispositif de verrouillage (1) selon la revendication 8,
dans lequel la patte de serrage (11) est réalisée en une seule pièce avec le premier flanc (3).

10. Dispositif de verrouillage (1) selon l'une quelconque des revendications 1 et 2, dans lequel l'élément élastique (7) comprend au moins une section périphérique glissante (13), la surface de ladite section glissante (13) étant incurvée.

11. Dispositif de verrouillage (1) selon l'une quelconque des revendications 3 à 9, dans lequel l'élément élastique (7) comprend au moins une section périphérique glissante (13), la surface de ladite section glissante (13) étant incurvée en direction du second flanc (5).

12. Boîtier d'actionneur de frein (100), comprenant deux parties de boîtier (101, 103) s'unissant l'une à l'autre selon un accouplement à baïonnette,
dans lequel les deux parties de boîtier (101, 103) comprennent des éléments d'accouplement qui sont destinés à être unis par un mouvement d'accouplement, **caractérisé en ce que** le boîtier comprend en outre
un dispositif de verrouillage (1) pour fixer les parties du boîtier dans leur position d'accouplement, dans lequel ledit dispositif de verrouillage (1) est un dispositif de verrouillage (1) selon l'une quelconque des revendications précédentes.

13. Boîtier d'actionnement de frein selon la revendication 12,
dans lequel la première partie du boîtier (101) comprend une bride (113) ayant une pluralité d'évidements à baïonnette (107), et la seconde partie du boîtier (103) comprend une collerette (111) ayant un certain nombre d'éléments d'accouplement à baïonnette correspondant à un évidement à baïonnette (107) respectif de la première partie du boîtier (101), et dans lequel au moins un dispositif de verrouillage (1) est positionné dans l'au moins un évidement (107).

14. Boîtier d'actionnement de frein (100) selon la revendication 13,
dans lequel la bride (113) de la première partie du boîtier (101) et la collerette (111) de la seconde partie du boîtier (103) se superposent de telle sorte que l'au moins un dispositif de verrouillage (1) se trouve entièrement à l'intérieur du boîtier d'actionneur de frein (100).
